(19) Europäisches Patentamt
European Patent Office
Office européen des brevets

(11) Veröffentlichungsnummer: **0 267 506 B1**

(12) **EUROPÄISCHE PATENTSCHRIFT**

(45) Veröffentlichungstag der Patentschrift: **17.03.93**

(51) Int. Cl.[5]: **C08F 8/46**, C08F 279/04, C08F 6/00

(21) Anmeldenummer: **87116037.0**

(22) Anmeldetag: **31.10.87**

(54) **ABS-Formmassen mit reduziertem Restbutadiengehalt.**

(30) Priorität: **13.11.86 DE 3638704**

(43) Veröffentlichungstag der Anmeldung:
**18.05.88 Patentblatt 88/20**

(45) Bekanntmachung des Hinweises auf die Patenterteilung:
**17.03.93 Patentblatt 93/11**

(84) Benannte Vertragsstaaten:
**DE ES FR GB IT NL**

(56) Entgegenhaltungen:
**US-A- 3 984 499**

**CHEMICAL ABSTRACTS, Band 83, 1975, Seite 31, Zusammenfassung Nr. 29009j, Columbus, Ohio, US**

(73) Patentinhaber: **BAYER AG**

**W-5090 Leverkusen 1 Bayerwerk(DE)**

(72) Erfinder: **Eichenauer, Herbert, Dr.**
**Goethestrasse 71**
**W-4047 Dormagen(DE)**
Erfinder: **Pischtschan, Alfred, Dr.**
**Zur Eiche 33**
**W-5067 Kürten(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.5x/3.0.1)

## Beschreibung

Die Erfindung betrifft ABS-Formmassen mit einem auch bei hoher Verarbeitungstemperatur deutlich verminderten Restbutadiengehalt.

ABS-Formmassen sind Zweiphasenkunststoffe aus

1.) einem thermoplastischen Copolymerisat aus Styrol und Acrylnitril, in dem das Styrol ganz oder teilweise durch $\alpha$-Methylstyrol oder Methylmethacrylat ersetzt werden kann; dieses Copolymerisat, auch als SAN-Harz oder Matrix-Harz bezeichnet, bildet die äußere Phase;

2.) mindestens einem Pfropfpolymerisat, welches hergestellt worden ist durch Pfropfreaktion eines oder mehrerer der unter 1.) genannten Monomeren auf ein Butadienhomo- oder -copolymerisat ("Pfropfgrundlage"). Dieses Pfropfpolymerisat ("Elastomerphase" oder "Pfropfkautschuk") bildet die disperse Phase im Matrixharz.

Die unter 1.) und 2.) genannten Polymerisate können nach bekannten Verfahren hergestellt werden, z.B. durch Emulsions-, Lösungs-, Masse-, Suspensions- oder Fällungspolymerisation oder durch Kombination dieser Verfahren.

Die wegen des nicht vollständigen Umsatzes im Polymerisat enthaltenen unveränderten Monomeren können durch der Polymerisation nachgeschaltete Entgasung oder während der Aufarbeitung entfernt werden. (vgl. z.B. EP-A-35 661 zur Entgasung und US-PSS 2 727 884 und 2 941 935 zur Restmonomerentfernung).

Allerdings läßt sich durch Entgasung von Polymeren nur dann mit Sicherheit ein niedriger Restmonomergehalt im Endprodukt erreichen, wenn eine erneute Bildung von Monomeren (z.B. durch thermische Spaltung des Polymeren während der Verarbeitung) ausgeschlossen werden kann.

Während bei entgasten ABS-Polymerisaten der Gehalt an monomerem Styrol und Acrylnitril erst bei sehr hohen Verarbeitungstemperaturen ansteigt, kann monomeres Butadien - je nach der Mikrostruktur des zur Herstellung des Pfropfkautschuks eingesetzten Butadienpolymeren - schon bei relativ niedrigen Verarbeitungstemperaturen abgespalten werden.

Zur Entfernung von restlichen Styrol- oder Acrylnitrilmengen in Polymeren durch Zusatz geeigneter Verbindungen sind zahlreiche Methoden beschrieben:

So beschreiben die US-PS 4 180 486, 4 221 878 und 4 221 905 die Verwendung von Myrcen zur Absenkung der Gehalte an restlichem Styrol und Acrylnitril, in US-PS 4 124 658 wird die Verwendung von Sulfonylhydraziden zur Absenkung des Styrolgehaltes empfohlen, während die DE-OS 3 215 911 die Verwendung spezieller bicyclischer Verbindungen, z. B, Dicyclopentadien, zur Entfernung von Styrol und Acrylnitril vorschlägt.

Das US-Patent 3,984,499 lehrt die Stabilisierung thermoplastischer Nitrilharze gegen mechanische Verfärbung durch Zugabe von 0,1 bis 1,5 % von Estern gewisser Polycarbensäuren. Insbesondere sind Halbester der Maleinsäure und Fumarsäure genannt, wahrend die Diester als unbrauchbar bezeichnet werden.

Das Abstract der japanischen Patentanmeldung 7446146 lehrt ein bestimmtes, mit Hilfe von Nathumthiosulfat hergestelltes thermoplastisches Harz, welches ein Pfropfpolymerisat darstellt, mit Maleinsäureanhydrid zu vermischen, um die Wärmebeständigkeit zu verbessern. Diesen beiden lehren liegen andere Additive und andere Zielsetzungen zugrunde als die der vorliegenden Erfindung.

Verbindungen, deren Zusatz den Restgehalt an monomerem Butadien herabsetzt, sind bisher nicht bekannt.

Gegenstand der vorliegenden Erfindung ist es, ABS-Polymerisat-Formmassen herzustellen, die auch nach der Verarbeitung zum fertigen Formteil einen niedrigen Butadiengehalt aufweisen. Dabei werden die sonstigen Eigenschaften der Polymerisate nicht verändert.

Es wurde gefunden, daß dies durch Zusatz einer Verbindung der allgemeinen Formeln A, B oder C gelingt.

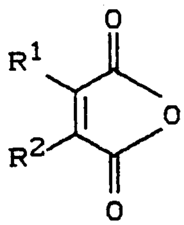
A

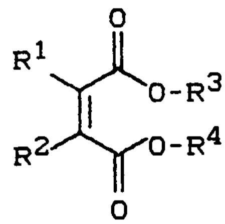
B

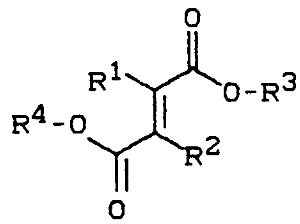
C

$R^1$, $R^2$ = unabhängig voneinander H, $C_1$-$C_4$-Alkyl,

$R^3$, $R^4$ = unabhängig voneinander H, $C_1$-$C_8$-Alkyl, $C_7$-$C_{10}$-Alkaryl, $C_7$-$C_{10}$-Aralkyl, Phenyl,

mit der Ausnahme von Verbindung der Formeln B und C, die Maleinsäure- und Fumarsäurehalbester darstellen.

Gegenstand der Erfindung sind Formmassen, aus einem ABS-Polymerisat und einer Verbindung der allgemeinen Formeln A, B oder C oder Mischungen daraus in Mengen von 0,05 bis 2,0 Gew.-% (bezogen auf ABS-Polymerisat), vorzugsweise von 0,1 bis 1,5 Gew.-% und besonders bevorzugt von 0,1 bis 1,0 Gew.-%.

ABS-Polymerisate im Sinne der Erfindung enthalten 5 bis 100 Gew.-%, vorzugsweise 5 bis 80 Gew.-%, eines Pfropfpolymerisats und 95-0 Gew.-%, vorzugsweise 95 bis 20 Gew.-%, eines thermoplastischen Copolymerisatharzes.

Besonders bevorzugt sind thermoplastische Formmassen aus

I. 100 Gew.-Teilen eines ABS-Polymerisats folgender Zusammensetzung:

1.) 5-100 Gew.-%, vorzugsweise 5-80 Gew.-%, eines Pfropfmischpolymerisats, hergestellt durch Pfropfpolymerisation von

1.1) 5-90 Gew.-%, vorzugsweise 30-80 Gew.-%, einer Mischung aus

1.1.1) 5-50 Gew.-% (Meth)Acrylnitril, Maleinsäureanhydrid, N-substituierte Maleinimide oder Mischungen daraus und

1.1.2) 95-50 Gew.-% Styrol, $\alpha$-Methylstyrol, kernsubstituiertes Styrol, Methylmethacrylat oder Mischungen daraus auf

1.2) 95-10 Gew.-%, vorzugsweise 70-20 Gew.-%, eines Kautschuks mit einer Glasübergangstemperatur $T_G < 10°C$, der Butadien als eine Monomerkomponente eingebaut erhält

und

II. 0,05-2 Gew.-Teilen, bevorzugt 0,1-1,5 Gew.-% und insbesondere 0,1-1,0 Gew.-% einer Verbindung der allgemeinen Formeln A, B, C oder Mischungen daraus.

Pfropfpolymerisate im Sinne der Erfindung sind solche, in denen auf einen Kautschuk, Styrol oder Methylmethacrylat oder eine Mischung von 95-50 Gew.-% Styrol, $\alpha$-Methylstyrol, kernsubstituiertes Styrol, Methylmethacrylat oder Mischungen daraus und 5-50 Gew.-% Acrylnitril, Methacrylnitril, Maleinsäureanhydrid, N-substituierte Maleinimide oder Mischungen daraus ("Pfropfmonomere") pfropfpolymerisiert sind. Geeignete Kautschuke sind praktisch alle Kautschuke mit Glasübergangstemperaturen $\leq 10°C$, die Butadien einpolymerisiert enthalten. Beispiele sind Polybutadien, Styrol-Butadien-Copolymerisate, Acrylnitril-Butadien-Copolymerisate, Acrylatkautschuke mit eingebauten, von Butadien abgeleiteten Struktureinheiten, Acrylatkautschuke mit Kern/Mantel Struktur, die einen vernetzten Kautschuk wie Polybutadien oder ein Copolymerisat von Butadien mit einem ethylenisch ungesättigten Monomer, wie Styrol und/oder Acrylnitril als Kern enthalten, der von einem Mantel aus Acrylatkautschuk umgeben ist.

Bevorzugt ist Polybutadien.

Die Pfropfpolymerisate enthalten 10-95 Gew.-%, insbesondere 20-70 Gew.-%, Kautschuk und 9-5 Gew.-%, insbesondere 80-30 Gew,-%, pfropfcopolymerisierte Monomere. Die Kautschuke liegen in diesen Pfropfcopolymerisaten in Form Wenigstens partiell vernetzter Teilchen eines mittleren Teilchendurchmesser ($d_{50}$) von 0,05 bis 20,0 $\mu$m, bevorzugt von 0,1 bis 2,0 $\mu$m und besonders bevorzugt von 0,1 bis 0,8 $\mu$m, vor.

Mit Pfropfpolymerisat ist hier das Reaktionsprodukt der Pfropfreaktion bezeichnet. Es handelt sich also um ein Gemisch aus dem eigentlichen Pfropfpolymeren, in dem eine chemische Bindung des polymerisierten Pfropfmonomeren an den Kautschuk vorliegt und separat vorliegendem Copolymerisat der Pfropfmonomeren. Der Pfropfgrad, d.h. das Gewichtsverhältnis gepfropfter Monomerer zu Kautschuk ist im allgemeinen 0,1 bis ca. 0,8, bevorzugt etwa 0,3-0,6.

Solche Pfropfcopolymerisate können durch radikalische Pfropfcopolymerisation der Pfropfmonomeren in Gegenwart der zu bepfropfenden Kautschuke in an sich bekannter Weise hergestellt werden.

Die thermoplastischen Copolymerisate können aus den Pfropfmonomeren oder ähnlichen Monomeren aufgebaut sein, insbesondere aus wenigstens einem der Monomeren Styrol, α-Methylstyrol, Halogenstyrol, Acrylnitril, Methacrylnitril, Methylmethacrylat, Maleinsäureanhydrid, Vinylacetat und N-substituiertes Maleinimid. Es handelt sich bevorzugt um Copolymerisate aus 95-50 Gew.-% Styrol, α-Methylstyrol, Methylmethacrylat oder Mischungen daraus mit 5-50 Gew.-% Acrylnitril, Methacrylnitril, Methylmethacrylat, Maleinsäureanhydrid oder Mischungen daraus. Solche Copolymerisate entstehen auch bei der Pfropfcopolymerisation als Nebenprodukte. Es ist üblich, neben den im Pfropfpolymerisat enthaltenen Copolymeren noch getrennt hergestellte Copolymere zuzumischen. Diese müssen nicht mit den in den Pfropfpolymerisaten enthaltenen freien Copolymerisaten chemisch identisch sein.

Geeignete getrennt hergestellte Copolymerisate sind harzartig, thermoplastisch und kautschukfrei; es sind insbesondere Copolymere aus Styrol und/oder α-Methylstyrol mit Acrylnitril, gegebenenfalls in Mischung mit Methylmethacrylat.

Besonders bevorzugte Copolymerisate sind erhalten aus 20-40 Gew.-% Acrylnitril und 80-60 Gew.-% Styrol oder α-Methylstyrol. Sie sind bekannt und lassen sich durch radikalische Polymerisation, z.B. in Emulsion, Suspension, Lösung- oder Masse herstellen. Die Copolymerisate besitzen vorzugsweise Molekulargewichte $\overline{M}_w$ von 15.000 bis 200.000

Beispiele für geeignete Verbindungen mit den allgemeinen Formeln A, B oder C sind:

Maleinsäureanhydrid, Methylmaleinsäureanhydrid, Dimethylmaleinsäureanhydrid, Ethylmaleinsäureanhydrid, Diethylmaleinsäureanhydrid, Maleinsäure, Methylmaleinsäure, Dimethylmaleinsäure, Ethylmaleinsäure, Diethylmaleinsäure, Maleinsäuredimethylester, Maleinsäurediethylester, Maleinsäuredipropylester, Maleinsäuredibutylester, Methylmaleinsäuremonomethylester, Methylmaleinsäuredimethylester, Methylmaleinsäuremonoethylester, Methylmaleinsäurediethylester, Methylmaleinsäuremonobutylester, Methylmaleinsäuredibutylester, Fumarsäure, Methylfumarsäure, Dimethylfumarsäure, Ethylfumarsäure, Diethylfumarsäure, Fumarsäuredimethylester, Fumarsäurediethylester, Fumarsäuredipropylester, Fumarsäuredibutylester, Methylfumarsäuredimethylester, Methylfumarsäurediethylester, Methylfumarsäuredibutylester.

Bevorzugte Verbindungen sind Maleinsäureanhydrid, Maleinsäure, Fumarsäure, Maleinsäuredimethylester, Fumarsäuredimethylester, Methylmaleinsäureanhydrid, Methylmaleinsäure, Methylfumarsäure oder Mischungen daraus.

Weiterhin sind die Verbindungen der allgemeinen Formeln A, B oder C auch zur Absenkung des Restbutadiengehaltes in reinen Kautschuken geeignet, bei deren Herstellung Butadien als Monomerbaustein eingesetzt wurde. Beispiele für solche Kautschukpolymere sind Polybutadien, Butadien/Acrylnitril-Copolymere, Butadien/Styrol-Copolymere, Butadien/Butylacrylat-Copolymere oder Co- oder Terpolymere, die neben Butadien Monomere wie z.B. Chloropren, Vinylpyridin, (Meth)Acrylsäureester eingebaut enthalten.

Die Formmassen können die üblichen Zusätze wie Pigmente, Füllstoffe, Stabilisatoren, Antistatika, Gleitmittel, Entformungsmittel und Flammschutzmittel enthalten.

Ein weiterer Gegenstand der Erfindung ist ein Verfahren zur Herstellung von ABS-Formmassen, die auch nach der Verarbeitung zum fertigen Formteil einen niedrigen Restbutadiengehalt aufweisen, das dadurch gekennzeichnet ist, daß man 0,05 bis 2,0 Gew.-% (bezogen auf Formmasse), vorzugsweise 0,1 bis 1,5 Gew.-% und besonders bevorzugt 0,1 bis 1,0 Gew.-% einer Verbindung der allgemeinen Formeln A, B oder C zu dem aus den oben beschriebenen Komponenten bestehenden ABS-Polymerisat zufügt und bei höheren Temperaturen, insbesondere bei T = 100 °C bis 280 °C, mit dem ABS-Polymerisat innig vermischt.

ABS-Polymerisat und Zusatzstoff (A), (B) oder (C) kann in üblichen Mischaggregaten, z.B. in Knetern, Innenmischern, auf Walzenstühlen, Schneckenmaschinen oder Extrudern, gemischt werden. Dabei sind je nach Intensität der Durchmischung 10 Sekunden bei 30 Minuten erforderlich.

Die erhaltenen Formmassen können für die üblichen Verwendungszwecke von ABS eingesetzt werden. Ihr überraschender Vorteil ist ein geringer Gehalt an restlichen Monomeren an Butadien.

## Beispiele

Eingesetzte Polymerisate:

A) Pfropfkautschuk, bestehend aus 50 Gew.-% Polybutadien mit einem mittleren Teilchendurchmesser ($d_{50}$) von 0,4 µm als Pfropfgrundlage, auf die 36 Gew.-% Styrol und 14 Gew.-% Acrylnitril aufgepfropft wurden.

B) Pfropfkautschuk, bestehend aus 50 Gew.-% Polybutadien mit einem mittleren Teilchendurchmesser ($d_{50}$) von 0,1 µm als Pfropfgrundlage, auf die 36 Gew.-% Styrol und 14 Gew.-% Acrylnitril aufgepfropft

wurden.

C) Styrol/Acrylnitril Copolymerisat aus 72 Gew.-% Styrol und 28 Gew.-% Acrylnitril mit einem Molekulargewicht (Gewichtsmodul) $\overline{M}_w$ von ca. 80.000 und einer molekularen Uneinheitlichkeit U = $\overline{M}_w/\overline{M}_n$-1 = 2.

D) Styrol/Acrylnitril Copolymerisat aus 72 Gew.-% Styrol und 28 Gew.-% Acrylnitril mit einem $\overline{M}_w$ von ca. 115.000 und U = $\overline{M}_w/\overline{M}_n$-1 = 2.

E) $\alpha$-Methylstyrol/Acrylnitril Copolymerisat aus 72 Gew.-% $\alpha$-Methylstyrol und 28 Gew.-% Acrylnitril mit einem $\overline{M}_w$ von ca. 77.000 und U = $\overline{M}_w/\overline{M}_n$-1 = 2.

Beispiele 1 bis 8

Die in Tabelle 1 angegebenen Mengen Maleinsäure bzw. Fumarsäure wurden in einem Innenkneter mit einem Gemisch aus 25 Gewichtsteilen Polymer A, 25 Gewichtsteilen Polymer B und 50 Gewichtsteilen Polymer C sowie 2 Gewichtsteilen Pentaerythrittetrastearat bei 180 bis 200° C innerhalb 3 bis 5 Minuten vermischt, wonach das resultierende Gemisch granuliert und anschließend durch Spritzgießen bei 240° C, 260° C und 280° C verarbeitet wurde (75 Sekunden-Zyklus).

Beispiele 9 bis 20

Die in Tabelle 2 angegebenen Mengen Maleinsäureanhydrid wurden in einem Innenkneter mit einem Gemisch aus 50 Gewichtsteilen Polymer A, 50 Gewichtsteilen Polymer D und 2 Gewichtsteilen Pentaerythrittetrastearat (Beispiele 9 bis 14) bzw. einem Gemisch aus 17,5 Gewichtsteilen Polymer A, 17,5 Gewichtsteilen Polymer B, 65 Gewichtsteilen Polymer E und 2 Gewichtsteilen Pentaerythrittetrastearat (Beispiele 15 bis 20) bei 196 bis 214° C innerhalb 3 bis 5 Minuten vermischt, wonach das resultierende Gemisch granuliert und anschließend durch Spritzgießen bei 220° C, 260° C und 280° C verarbeitet wurde (75 Sekunden-Zyklus).

Beispiele 21 bis 30

Die in Tabelle 3 angegebenen Verbindungen wurden in den angegebenen Mengen in einem Innenkneter mit einem Gemisch aus 50 Gewichtsteilen Polymer A, 50 Gewichtsteilen Polymer D und 2 Gewichtsteilen Pentaerythrittetrastearat bei 192 bis 197° C innerhalb 4 bis 5 Minuten vermischt, wonach das resultierende Gemisch granuliert und anschließend durch Spritzgießen bei 240° C und 260° C verarbeitet wurde (75 Sekunden-Zyklus).

Wie aus den Tabellen 1 bis 3 ersichtlich ist, führt der Zusatz von Verbindungen der allgemeinen Formeln A, B oder C zu Produkten mit einem deutlich vermindertem Butadiengehalt.

Die Eigenschaften der ABS-Polymerisate, z.B. Kerbschlagzähigkeit, Härte und Wärmeformbeständigkeit wurden durch den Gehalt an den Verbindungen A, B oder C nicht verändert.

Tabelle 1

| Beispiel | Maleinsäure [Gew.-Tl.] | Fumarsäure [Gew.-Tl.] | Butadienmenge im Granulat | Butadienmenge im Spritzguß-Formteil bei Verarbeitungstemperatur 240° C | 260° C | 280° C |
|---|---|---|---|---|---|---|
| 1 (Vergl.) | - | - | 5,1 ppm | 3,8 ppm | 5,7 ppm | 11,5 ppm |
| 2 | 0,05 | - | 4,1 ppm | 2,1 ppm | 4,4 ppm | 12,1 ppm |
| 3 | 0,1 | - | 3,2 ppm | 0,7 ppm | 3,8 ppm | 9,4 ppm |
| 4 | 0,3 | - | 1,1 ppm | 0,4 ppm | 2,9 ppm | 10,0 ppm |
| 5 | 0,5 | - | < 0,1 ppm | < 0,1 ppm | 0,1 ppm | 1,1 ppm |
| 6 | 1,5 | - | < 0,1 ppm | < 0,1 ppm | < 0,1 ppm | 1,2 ppm |
| 7 | - | 0,5 | 1,6 ppm | 0,2 ppm | 0,2 ppm | 0,8 ppm |
| 8 | - | 1,5 | 0,9 ppm | < 0,1 ppm | < 0,1 ppm | 0,5 ppm |

Tabelle 2

| Beispiel | Maleinsäureanhydrid [Gew.-Teile] | Butadienmenge im Granulat | Butadienmenge im Spritzguß-Formteil bei Verarbeitungstemperatur 220° C | 260° C | 280° C |
|---|---|---|---|---|---|
| 9(Vergl.) | - | 1,5 ppm | 2,0 ppm | 2,6 ppm | 4,8 ppm |
| 10 | 0,1 | 0,3 ppm | 0,3 ppm | 1,1 ppm | 4,8 ppm |
| 11 | 0,25 | < 0,1 ppm | < 0,1 ppm | 0,7 ppm | 2,9 ppm |
| 12 | 0,5 | < 0,1 ppm | < 0,1 ppm | 0,4 ppm | 2,7 ppm |
| 13 | 0,75 | < 0,1 ppm | < 0,1 ppm | 0,2 ppm | 2,9 ppm |
| 14 | 1 | < 0,1 ppm | < 0,1 ppm | 0,2 ppm | 2,3 ppm |
| 15(Vergl.) | - | 2,5 ppm | 2,3 ppm | 2,0 ppm | 3,1 ppm |
| 16 | 0,1 | 0,3 ppm | 0,2 ppm | 1,0 ppm | 2,5 ppm |
| 17 | 0,25 | < 0,1 ppm | < 0,1 ppm | 0,5 ppm | 1,9 ppm |
| 18 | 0,5 | < 0,1 ppm | < 0,1 ppm | 0,3 ppm | 1,4 ppm |
| 19 | 0,75 | < 0,1 ppm | < 0,1 ppm | 0,2 ppm | 1,2 ppm |
| 20 | 1 | < 0,1 ppm | < 0,1 ppm | 0,2 ppm | 1,1 ppm |

Tabelle 1

| Beispiel | Maleinsäure-diethylester [Gew.-Tl.] | Maleinsäure-di-n-butylester [Gew.-Tl.] | Fumarsäure-dimethylester [Gew.-Tl.] | Butadienmenge im Granulat | Butadienmenge im Spritzguß-Formteil bei Verarbeitungstemperatur 240° C | 260° C |
|---|---|---|---|---|---|---|
| 21(Vergl.) | - | - | - | 1,5 ppm | 2,6 ppm | 4,8 ppm |
| 22 | 0,25 | - | - | 1,0 ppm | 1,4 ppm | 3,0 ppm |
| 23 | 0,5 | - | - | 1,3 ppm | 1,3 ppm | 2,3 ppm |
| 24 | 1,0 | - | - | 1,1 ppm | 0,9 ppm | 2,1 ppm |
| 25 | - | 0,25 | - | 1,1 ppm | 1,4 ppm | 2,0 ppm |
| 26 | - | 0,5 | - | 1,0 ppm | 1,2 ppm | 1,7 ppm |
| 27 | - | 1,0 | - | 1,0 ppm | 0,8 ppm | 1,5 ppm |
| 28 | - | - | 0,25 | 1,0 ppm | 0,8 ppm | 1,8 ppm |
| 29 | - | - | 0,5 | 1,0 ppm | 0,4 ppm | 1,1 ppm |
| 30 | - | - | 1,0 | 0,6 ppm | 0,2 ppm | 0,5 ppm |

## Patentansprüche

1. Thermoplastische Formassen aus einem ABS-Polymerisat und 0,05 bis 2,0 Gew.-% (bezogen auf ABS-Polymerisat) einer Verbindung der allgemeinen Formeln A, B, C oder Mischungen daraus

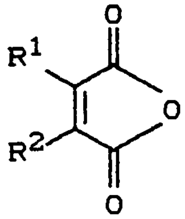 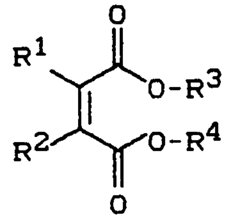 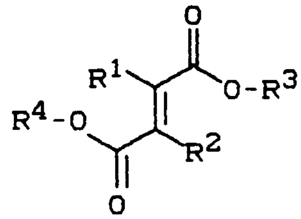

A B C

mit

$R^1$, $R^2$ = unabhängig voneinander H, $C_1$-$C_4$-Alkyl,

$R^3$, $R^4$ = unabhängig voneinander H, $C_1$-$C_8$-Alkyl, $C_7$-$C_{10}$-Alkaryl, $C_7$-$C_{10}$-Aralkyl, Phenyl,

mit der Ausnahme von Verbindung der Formeln B und C, die Maleinsäure- und Fumarsäurehalbester darstellen.

**2.** Thermoplastische Formmassen aus

I. 100 Gew.-Teilen eines ABS-Polymerisats folgender Zusammensetzung:

1.) 5-100 Gew.-%, vorzugsweise 5-80 Gew.-%, eines Pfropfmischpolymerisats, hergestellt durch Pfropfpolymerisation von

1.1) 5-90 Gew.-%, vorzugsweise 30-80 Gew.-%, einer Mischung aus

1.1.1) 5-50 Gew.-% (Meth)Acrylnitril, Maleinsäureanhydrid, N-substituierte Maleinimide oder Mischungen daraus und

1.1.2) 95-50 Gew.-% Styrol, α-Methylstyrol, kernsubstituiertes Styrol, Methylmethacrylat oder Mischungen daraus auf

1.2) 95-10 Gew.-%, vorzugsweise 70-20 Gew.-%, eines Kautschuks mit einer Glasübergangstemperatur $T_G < 10\,°C$, der Butadien als eine Monomerkomponente eingebaut erhält

und

II. 0,05-2 Gew.-Teilen einer Verbindung der allgemeinen Formeln A, B, C oder Mischungen daraus

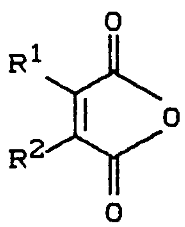 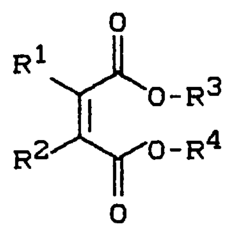 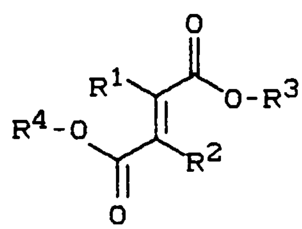

A B C

mit

$R^1$, $R^2$ = unabhängig voneinander H, $C_1$-$C_4$-Alkyl

$R^3$, $R^4$ = unabhängig voneinander H, $C_1$-$C_8$-Alkyl, $C_7$-$C_{10}$-Alkaryl, $C_7$-$C_{10}$-Aralkyl, Phenyl,

mit der Ausnahme von Verbindung der Formeln B und C, und Maleinsäure- und Fumarsäurehalbester darstellen.

**3.** Thermoplastische Formassen gemäß Ansprüchen 1 und 2, dadurch gekennzeichnet, daß als Verbindung A, B oder C Maleinsäureanhydrid, Maleinsäure, Fumarsäure, Maleinsäuredimethylester, Fumarsäuredimethylester, Methylmaleinsäureanhydrid, Methylmaleinsäure, Methylfumarsäure oder Mischungen daraus verwendet werden.

**4.** Verfahren zur Herstellung von ABS-Formmassen gemäß Anspruch 1, dadurch gekennzeichnet, daß man 0,05 bis 2,0 Gew.-% (bezogen auf ABS-Polymerisat) einer Verbindung der allgemeinen Formeln A, B oder C zu einem ABS-Polymerisat gibt und bei einer Temperatur von 100 °C bis 280 °C innig vermischt.

**5.** Verfahren zur Herstellung von ABS-Formmassen gemäß Anspruch 4, dadurch gekennzeichnet, daß als Verbindung A, B oder C Maleinsäureanhydrid, Maleinsäure, Fumarsäure, Maleinsäuredimethylester, Fumarsäuredimethylester, Methylmaleinsäureanhydrid, Methylmaleinsäure, Methylfumarsäure oder Mischungen daraus eingesetzt werden.

**Claims**

**1.** Thermoplastic moulding compounds of an ABS polymer and 0.05 to 2.0% by weight (based on ABS polymer) of a compound corresponding to general formula A, B or C or mixtures thereof

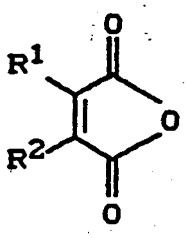
A

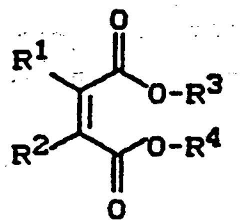
B

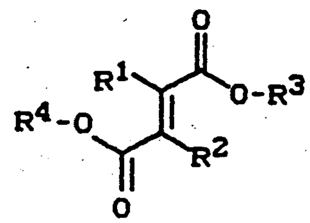
C

in which

$R^1$ and $R^2$ independently of one another represent H, $C_{1-4}$ alkyl,

$R^3$ and $R^4$ independently of one another represent H, $C_{1-8}$ alkyl, $C_{7-20}$ alkaryl, $C_{7-10}$ aralkyl, phenyl,

with the exception of compounds corresponding to formulae B and C which represent maleic acid and fumaric acid semiesters.

**2.** Thermoplastic moulding compounds of

I. 100 parts by weight of an ABS polymer having the following composition:

1.) 5 to 100% by weight and preferably 5 to 80% by weight of a graft copolymer prepared by graft polymerization of

1.1) 5 to 90% by weight and preferably 30 to 80% by weight of a mixture of

1.1.1) 5 to 50% by weight (meth)acrylonitrile, maleic anhydride, N-substituted maleic imides or mixtures thereof and

1.1.2) 95 to 50% by weight styrene, $\alpha$-methyl styrene, nucleus-substituted styrene, methyl methacrylate or mixtures thereof onto

1.2) 95 to 10% by weight and preferably 70 to 20% by weight of a rubber having a glass transition temperature $T_G$ of $< 10\,^\circ C$, in which butadiene is incorporated as a monomer component

and

II. 0.05 to 2 parts by weight of a compound corresponding to general formula A, B or C or mixtures thereof

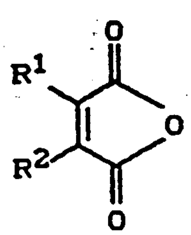
A

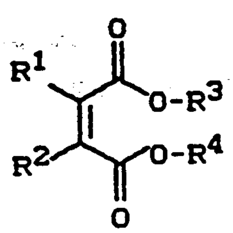
B

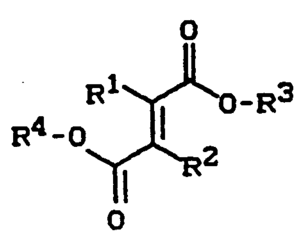
C

in which

$R^1$ and $R^2$ independently of one another represent H, $C_{1-4}$ alkyl,

$R^3$ and $R^4$ independently of one another represent H, $C_{1-8}$ alkyl, $C_{7-10}$ alkaryl, $C_{7-10}$ aralkyl,

phenyl,
with the exception of compounds corresponding to formulae B and C which represent maleic acid and fumaric acid semiesters.

**3.** Thermoplastic moulding compounds as claimed in claims 1 and 2, characterized in that maleic anhydride, maleic acid, fumaric acid, maleic acid dimethyl ester, fumaric acid dimethyl ester, methyl maleic anhydride, methyl maleic acid, methyl fumaric acid or mixtures thereof is/are used as compound A, B or C.

**4.** A process for the production of the ABS moulding compounds claimed in claim 1, characterized in that 0.05 to 2.0% by weight (based on ASS polymer) of a compound corresponding to general formula A, B or C is added to an ABS polymer and thoroughly mixed therewith at a temperature of 100 to 280 °C.

**5.** A process as claimed in claim 4 for the production of ABS moulding compounds, characterized in that maleic anhydride, maleic acid, fumaric acid, maleic acid dimethyl ester, fumaric acid dimethyl ester, methyl maleic anhydride, methyl maleic acid, methyl fumaric acid or mixtures thereof is/are used as compound A, B or C.

**Revendications**

**1.** Matières à mouler thermoplastiques consistant en un polymère ABS et 0,05 à 2,0% en poids (par rapport au polymère ABS) d'un composé de formule générale A, B, C ou d'un mélange de tels composés

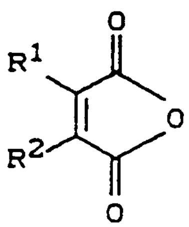

A

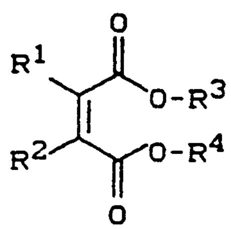

B

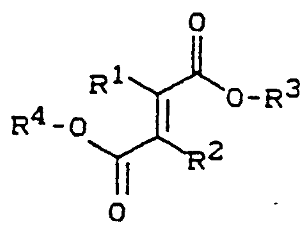

C

dans laquelle

$R^1$, $R^2$ représentent chacun, indépendamment l'un de l'autre, H, un groupe alkyle en $C_1$-$C_4$,

$R^3$, $R^4$ représentent chacun, indépendamment l'un de l'autre, H, un groupe alkyle en $C_1$-$C_8$, alkylaryle en $C_7$-$C_{10}$, aralkyle en $C_7$-$C_{10}$, phényle,

à l'exception des composés de formules B et C qui sont des hémiesters maléiques et fumariques.

**2.** Matières à mouler thermoplastiques consistant en :

**I.** 100 parties en poids d'un polymère ABS à la composition suivante :

**1.)** 5 à 100% en poids, de préférence 5 à 80% en poids, d'un copolymère greffé préparé par polymérisation greffée de

**1.1)** 5 à 90% en poids, de préférence 30 à 80% en poids, d'un mélange de :

**1.1.1.)** 5 à 50% en poids de (méth)acrylonitrile, d'anhydride maléique, d'un maléimide N-substitué ou d'un mélange de tels composés, et

**1.1.2)** 95 à 50% en poids de styrène, d'α-méthylstyrène, d'un styrène substitué dans le noyau, de méthacrylate de méthyle ou d'un mélange de tels composés sur

**1.2)** 95 à 10% en poids, de préférence 70 à 20% en poids, d'un caoutchouc présentant une température de transition du second ordre $T_G$ inférieure à 10 °C qui contient du butadiène à l'état chimiquement combiné en tant que composant monomère,

et

**II.** 0,05 à 2 parties en poids d'un composé de formule générale A, B, C ou d'un mélange de tels composés.

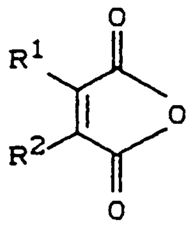

A

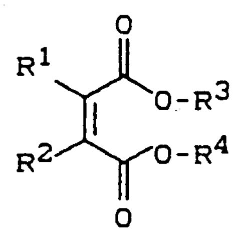

B

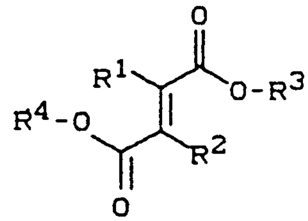

C

dans laquelle

$R^1$, $R^2$ représentent chacun, indépendamment l'un de l'autre, H, un groupe alkyle en $C_1$-$C_4$,

$R^3$, $R^4$ représentent chacun, indépendamment l'un de l'autre, H, un groupe alkyle en $C_1$-$C_8$, alkylaryle en $C_7$-$C_{10}$, aralkyle en $C_7$-$C_{10}$, phényle,

à l'exclusion des composés de formules B et C qui sont des hémiesters maléiques et fumariques.

**3.** Matières à mouler thermoplastiques selon la revendication 1 ou 2, caractérisées en ce que l'on a utilisé en tant que composé A, B ou C l'anhydride maléique, l'acide maléique, l'acide fumarique, le maléate de diméthyle, le fumarate de diméthyle, l'anhydride méthylmaléique, l'acide méthylmaléique, l'acide méthylfumarique ou un mélange de ces composés.

**4.** Procédé de préparation des matières à mouler ABS selon la revendication 1, caractérisé en ce que l'on ajoute à un polymère ABS de 0,05 à 2,0% en poids (par rapport au polymère ABS) d'un composé de formule générale A, B ou C et on mélange intimement à une température de 100 à 280 °C.

**5.** Procédé de préparation de matières à mouler ABS selon la revendication 4, caractérisé en ce que l'on utilise en tant que composé A, B ou C l'anhydride maléique, l'acide maléique, l'acide fumarique, le maléate de diméthyle, le fumarate de diméthyle, l'anhydride méthylmaléique, l'acide méthylmaléique, l'acide méthylfumarique ou un mélange de ces composés.